# EUROPEAN PATENT APPLICATION

(11) **EP 2 846 011 A1**
(43) Date of publication of application: **11.03.2015**
(21) Application number: 13182919.4
(22) Date of filing: 04.09.2013
(51) Int. Cl.: F01N 3/20, C01C 1/00, B01D 53/90

(54) **Method and system for purifying the exhaust gases of a combustion engine**

(71) Applicant: Inergy Automotive Systems Research (Société Anonyme), 1120 Bruxelles (BE)
(72) Inventor: Dougnier, François, 3190 Boortmeerbeek (BE); Madoux, Dominique, 7611 RUMES (BE); Van Schaftingen, Jules-Joseph, 1300 WAVRE (BE)
(74) Representative: Remy, Vincent Noel Paul

(57) **Abstract**

SCR method for purifying the exhaust gases of an internal combustion engine of a vehicle, according to which an ammonia precursor is stored in a container (1) mounted on board the vehicle. The method is such that it comprises the steps of:
- decomposing one part of the ammonia precursor into an aqua ammonia;
- storing the aqua ammonia in a unit (2) mounted on board the vehicle;
- metering the stored aqua ammonia into the exhaust gases.

## Description

The present application relates to a method and a system for purifying the exhaust gases of a combustion engine.

Legislation on vehicle and truck emissions stipulates, amongst other things, a reduction in the release of nitrogen oxides NOx into the atmosphere. One known way to achieve this objective is to use the SCR (Selective Catalytic Reduction) process which enables the reduction of nitrogen oxides by injection of a reducing agent, generally ammonia, into the exhaust line. This ammonia may be obtained by using different techniques.

One known technique is based on the use of an ammonia precursor, for example an aqueous urea solution (eutectic solution of 32.5 wt% urea in water). Generally, such urea solution is stored in a container mounted on the vehicle. The urea solution is injected into the exhaust line, and the gaseous ammonia is derived from the pyrolytic (thermal) decomposition of the injected urea solution. In case of cold start, it is required to be able to operate the SCR system at the end of a predetermined period of time starting from the engine start, this predetermined period of time depending on the ambient temperature. It is generally used a heating device to liquefy the frozen urea solution in freezing conditions. However, even by doing so, it takes a while before enough urea solution is thawed and injected into the exhaust line. On the other hand, in order to avoid deposits in the exhaust pipe, and insure the required chemical reactions aqueous urea solution must not be injected in the exhaust pipe before the exhaust gases have raised the temperature of the exhaust pipe at a sufficient temperature, typically in the 180°C - 200°C range.

In view of the above-mentioned disadvantage, there exists a need for an improved method and system for purifying the exhaust gases of a vehicle, in which ammonia is available quickly enough especially at cold start.

An object of the present invention is to solve this above-mentioned problem by proposing an SCR method for purifying the exhaust gases of an internal combustion engine of a vehicle, according to which an ammonia precursor is stored in a container mounted on board the vehicle. According to one aspect of the present invention, the method comprises the steps of:
- decomposing one part of the ammonia precursor into an aqua ammonia;
- storing the aqua ammonia in a unit mounted on board the vehicle;
- metering the stored aqua ammonia into the exhaust gases.

Thus, it is proposed to produce and store aqua ammonia, and to use it to remove the nitrogen oxides NOx from the exhaust gases.

In the present document, the term "aqua ammonia" is understood to mean a mixture of effluents resulting from the decomposition of an ammonia precursor. This mixture of effluents may contain ammonium hydroxide (a fraction of which is ionized), residue of ammonia precursor (i.e. part of ammonia precursor that has not been decomposed) and eventually other products (such as ammonium hydrogen carbonate). In one particular embodiment, the ammonia precursor may be a liquid ammonia precursor; in particular it can be a solution. In another particular embodiment, the ammonia precursor may be a solid.

In the particular case where the ammonia precursor is an ammonia precursor solution, the advantage of using aqua ammonia, is that the aqua ammonia remains available and active (i.e. ready to be metered in the exhaust gases) at temperatures at which the ammonia precursor solution is not available (generally because it is frozen). Thus, the availability of ammonia for NOx removal is improved. For example, the freezing point of a 14 wt% aqua ammonia solution is - 24°C, and even lower if some water is eliminated thanks to a concentrator.

The use of aqua ammonia instead of ammonia precursor in the exhaust pipe is also advantageous due to the fact that the step of hydrolysis of the ammonia precursor is no longer to be performed in the exhaust pipe. This allows more compact design in the exhaust pipe: elimination of hydrolysis catalyst, reduced distance from injection point to SCR catalyst. The reactivity can further be improved by increasing the concentration of aqua ammonia by eliminating part of the water prior to metering into the exhaust pipe.

Advantageously, it is proposed an automatic in situ conversion (i.e. decomposition) of the ammonia precursor into aqua ammonia. In other words, it is proposed a conversion of a first fluid-type reducing agent (for example, AdBlue^{®}) into a second fluid-type reducing agent. This conversion takes place on board the vehicle. No external aqua ammonia source is used and no disassembly manual operations are needed for the refilling of the unit where aqua ammonia is stored. Thus, the production and the use of aqua ammonia according to the invention are simple and safe.

According to a particular embodiment of the invention, two reducing agents (aqua ammonia and ammonia precursor solution) are metered in the exhaust gases in an alternate manner (i.e. metering of one reducing agent at a time). In a preferred embodiment, metering of aqua ammonia takes place when there is no ammonia precursor solution available in the container (generally either because said container is empty, or because the ammonia precursor solution is frozen, or because the line connecting the tank to the exhaust pipe is too cold and introduction of ammonia precursor into this line would cause freezing). In another embodiment, the aqua ammonia is first metered after the start of the engine so that NOx reduction can take place earlier than what could be done with the ammonia precursor before eventually switching to the ammonia precursor. In another embodiment, aqua ammonia is introduced in the line connecting the tank to the exhaust pipe at the time the engine is stopped so as to avoid freezing of the content of the line when the line is filled with the ammonia precursor solution. Of course, the advantages listed for the above embodiments can be combined.

In another particular embodiment, the aqua ammonia and the ammonia precursor solution can be both metered in parallel in the exhaust gases. For example, before the container containing the ammonia precursor solution is empty and if aqua ammonia is available, then the aqua ammonia can be metered in the exhaust gases while metering the ammonia precursor solution, so as to reduce the consumption of the remaining ammonia precursor solution while assuring adequate removal of NOx.

In a particular embodiment, the metering of the aqua ammonia starts when the exhaust gases have raised the temperature of the exhaust pipe at a predetermined temperature, for example at 150°C.

As mentioned above, the aqua ammonia can be first metered after the start of the engine. In this particular embodiment, the aqua ammonia is used as a start-up ammonia source for the NOx reduction. Thus, the start-up time of the SCR function is reduced, especially in cold conditions, since a sufficient amount of aqua ammonia is already available (i.e. aqua ammonia stored in a liquid state in the unit) or simply because aqua ammonia may be introduced at a lower temperature in the exhaust pipe than the ammonia precursor. In other words, in this particular embodiment, the unit containing the aqua ammonia can be used as a start-up unit.

In another particular embodiment, the unit containing the aqua ammonia can be used as a reserve unit.

Advantageously, the decomposition of the ammonia precursor continues for some time after the vehicle stops (i.e. engine shut down).

In an advantageous embodiment, it is proposed to increase the concentration of ammonia of the aqua ammonia by separating (partially or totally) water from the aqua ammonia by using a concentration device. In a preferred embodiment, the concentration device comprises a membrane. The higher the concentration of ammonia, the lower is the freezing point of the aqua ammonia. For example, the freezing point of a 14 wt% aqua ammonia solution is around - 24°C while the freezing point of a 27 wt% aqua ammonia solution is around - 85°C. The use of a more concentrated aqua ammonia is also advantageous due to the fact that there is less water to evaporate in the exhaust. In addition, the higher the concentration of ammonia, the lower is the temperature in the exhaust pipe from which the aqua ammonia can be introduced. Such concentration device can be placed downstream the unit containing the aqua ammonia or placed within the unit. The water removed from the aqua ammonia can be used for other application(s) on board the vehicle (for example, as a windshield washer fluid) or rejected in the exhaust pipe, or simply eliminated to the outside of the vehicle.

In a particular embodiment, the ammonia precursor is an ammonia precursor solution, preferably an aqueous urea solution.

The terms "urea solution" are understood to mean any, generally aqueous, solution containing urea. The invention gives good results with eutectic water/urea solutions for which there is a quality standard: for example, according to the standard ISO 22241, in the case of the AdBlue^{®} solution (commercial solution of urea), the urea content is between 31.8 % and 33.2 % (by weight) (i.e. 32.5 +/- 0.7 wt%) hence an available amount of ammonia between 18.0 % and 18.8 %. The invention may also be applied to the urea/ammonium formate mixtures, also in aqueous solution, sold under the trade name Denoxium™ and of which one of the compositions (Denoxium-30) contains an equivalent amount of ammonia to that of the AdBlue^{®} solution. The latter have the advantage of only freezing from -30°C onwards (as opposed to -11°C), but have the disadvantages of corrosion problems linked to the possible release of formic acid. The invention can also apply to guanidinium formate. The present invention is particularly advantageous in the context of eutectic water/urea solutions, which are widely available in gas stations.

It should be noted that it exists well known refilling standards and systems for ammonia precursor, in particular for the AdBlue^{®} solution (commercial solution of urea). The refilling of the storage container of the ammonia precursor solution is trivial. For example, this can be achieved by using available standard-designed nozzle and/or bottles with dedicated interfaces. The Adblue^{®} (commercial solution of urea) automotive fluid is currently readily available at numerous retail stations.

Advantageously, the unit containing the aqua ammonia is located at least partially inside the container and/or on a wall of the container containing the ammonia precursor.

According to a preferred embodiment of the invention, said unit is entirely located inside the container containing the ammonia precursor.

Thus, the safety of the system is increased since, if a leak of aqua ammonia occurs, the aqua ammonia will be trapped in the container containing the ammonia precursor (for example, urea).

According to a first particular embodiment of the invention, the unit comprises at least one protein component adapted to decompose the ammonia precursor. In this first particular embodiment, the unit acts as a biochemical decomposition and storage unit. This biochemical decomposition and storage unit can store one or several protein component(s) that catalyze a chemical reaction. More precisely, in the particular case where the ammonia precursor is an ammonia precursor solution, the protein component(s) is(are) adapted to catalyze the hydrolysis (i.e. decomposition) of the ammonia precursor solution (for example, urea) into aqua ammonia.

Advantageously, the bio-catalyzed decomposition occurs under mild temperature conditions and the products remain in solution (i.e. effluents), providing an easy way for vehicle storage, with a limitation of the generation of gaseous ammonia.

Advantageously, the protein component (stored in the decomposition unit) comprises at least one enzyme. In particular, thermophilic-type enzymes are well suited. In a preferred embodiment, the decomposition unit can store urease. Urease can be stored in any suitable manner. For example, in a first embodiment urease can be immobilized onto different polymers, or in different layers of resin. In a second embodiment urease can be fixed on membranes or on any other equivalent type of support. Advantageously, in this first particular embodiment, the biochemical decomposition and storage unit is equipped with a heater adapted to thermally activate the protein component(s). Such heater can provide the optimum temperature for the desired activity of the enzyme or protein. For example, the heater can be configured to maintain within the decomposition unit a temperature range between 20°C and 70°C. In a particular embodiment, the heater is a chamber whose temperature is controlled within predetermined ranges; in case the predetermined range falls below the temperature of the environment, cooling means will also be made available within the heater. In other words, the heater can either be controlled so as to rise up the temperature within the chamber or controlled so as to cool down the temperature within the chamber. In a particular embodiment, the heater is configured to work within at least one predetermined temperature range corresponding to the activation of the protein component when conversion is needed, and within at least another predetermined temperature range corresponding to the preservation of the protein component, so as to extend its lifetime.

According to a second particular embodiment of the invention, the unit comprises at least one heater adapted to thermally decompose the ammonia precursor. Inorganic-based catalysts can optionally be also placed in the decomposition unit to improve the conversion of the ammonia precursor. In a particular embodiment of the invention, the heater can comprise resistive heating elements. These resistive heating elements may be metallic heating filaments (wires), flexible heaters, (that is to say heaters comprising one or more resistive track(s) affixed to a film or placed between two films (that is to say two substantially flat supports, the material and thickness of which are such that they are flexible)) or any other type of resistive elements that have a shape, size and flexibility suitable for being inserted into and/or wound around the components of the SCR system. PTC (Positive Temperature Coefficient) elements are more particularly suitable for heating.

In another particular embodiment of the invention, the thermal decomposition of the ammonia precursor solution in the heater is performed using the dissipated heat of the engine (for instance, a flow of the liquid engine cooling system) and/or exhaust line (gases). For example, the production of an adequate quantity of aqua ammonia to be stored in the unit (i.e. the quantity required to operate the SCR system, especially in cold conditions, until enough ammonia precursor solution (in liquid state) is available) by thermal decomposition of a stream (i.e. part) of ammonia precursor solution in the heater can be performed during vehicle operation and/or after engine stop, preferably also using the dissipated heat of the engine and/or exhaust line. Thus, at next engine start, the necessary amount of aqua ammonia for SCR operation is readily available.

The as-decomposed aqua ammonia can be injected in the exhaust line of the vehicle. It can also be concentrated, in order to increase the ammonia content, providing a solution with an even lower freezing point. An ammonia concentration device can be integrated downstream the decomposition unit, based on water permeation through a composite membrane for example.

The present invention also concerns a system for applying the SCR method as described above, said system comprising:
- a container for the storage of an ammonia precursor;
- means for decomposing one part of the ammonia precursor into an aqua ammonia;
- a unit for the storage of the aqua ammonia;
- means for metering the stored aqua ammonia into the exhaust gases.

Advantageously, the means for decomposing and the unit for the storage form a unique decomposition and storage unit (i.e. module). This decomposition and storage unit can be entirely located inside the container. In a preferred embodiment, the decomposition and storage unit comprises an inlet through which ammonia precursor solution can enter.

In an advantageous embodiment, the decomposition and storage unit comprises at least one phase change material.

According to a first particular embodiment of the invention, the decomposition and storage unit comprises at least one protein component adapted to decompose the ammonia precursor.

According to a second particular embodiment of the invention, the decomposition and storage unit comprises at least one heater adapted to thermally decompose the ammonia precursor.

In an advantageous embodiment, the means for metering comprise one pump configured to pump aqua ammonia and ammonia precursor solution, in an alternate manner, and to transport them to an injector via a feed line. Thus, the system is simple and cost effective since only one pump is used.

Preferably, the pump is connected to a first suction point located inside the decomposition and storage unit.

The pump can further be connected to a second suction point located inside the container. For example, the pump can be connected to said first and second suction points via a 3-way valve. In an alternative, the pump can be directly connected to the second suction point (inside the container) and can be connected to said first suction point (inside the unit) via a non-return valve.

In an advantageous embodiment, the SCR system comprises a plurality (i.e. at least two) of decomposition and storage units. For example, the SCR system can comprise two decomposition and storage units mounted in parallel and cooperating together according to a predetermined delivery/production scheme. For example, one unit is used to deliver aqua ammonia while the other one is used to produce aqua ammonia (by decomposing the ammonia precursor, for example urea) for the next vehicle cold start-up. In another example, both units are synchronized, i.e. both units deliver aqua ammonia at the same time and produce aqua ammonia at the same time.

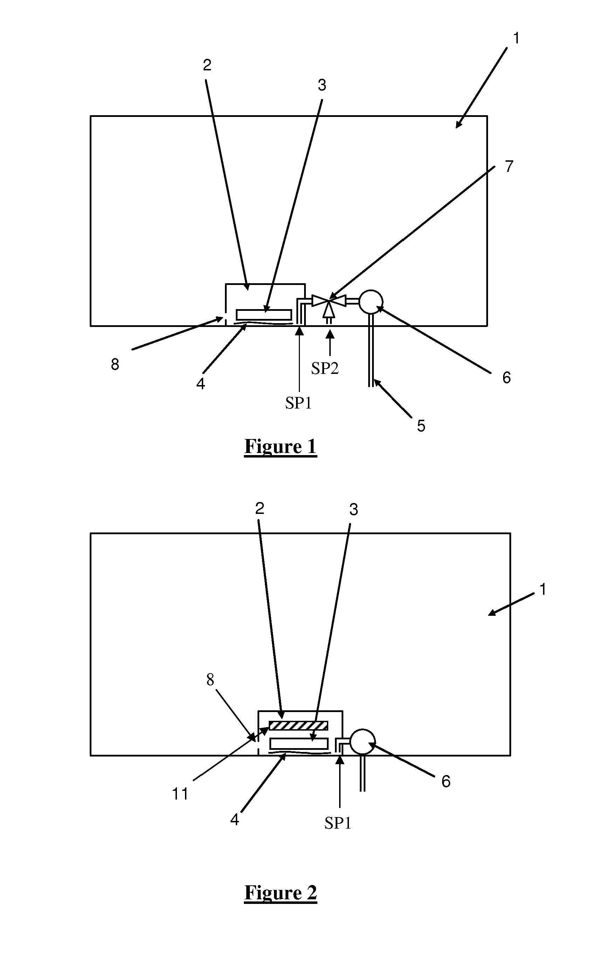

The present invention is illustrated in a non limitative way by the examples below relying on figures 1 to 4 attached. In these figures, identical or similar devices bear identical reference numbers.

Figure 1 is a schematic view of a SCR system according to a first particular embodiment of the present invention.

As illustrated in the example of Figure 1, the system comprises:
- a container (i.e. tank) [1] for the storage of an ammonia precursor solution;
   and
- a decomposition and storage unit [2] located inside the tank [1].

In a particular embodiment, the tank [1] stores an aqueous urea solution, for example AdBlue^{®} solution (commercial solution of urea).

In the example of Figure 1, the decomposition and storage unit [2] comprises a bio-agent [3] (i.e. protein component or protein sequence). This bio-agent [3] is adapted to decompose the urea stored in tank [1]. More precisely, the bio-agent [3] is adapted to convert the urea into an ammonia solution (i.e. aqua ammonia). For example, an enzyme, such as urease, can be used to decompose the urea. Of course, other suitable protein sequence can be used. Advantageously, the bio-agent [3] (for example, urease) is immobilized on a support. For example, the support can be a natural or synthetic organic polymer or an inorganic material (such as porous silica, clay, activated carbon, for example). The support can be in the form of a membrane or a layer of resin.

As illustrated, the decomposition and storage unit [2] comprises a heater [4] adapted to thermally activate the enzyme [3]. Advantageously, the heater [4] can also be used to defreeze the urea solution or to heat up the ammonia solution, in order to enhance vaporisation in the exhaust line (especially for vehicle key on (i.e. engine start-up) at low temperature).

The system also comprises a pump [6]. This pump [6] is configured to transport the urea or the aqua ammonia to an injector (not represented) via a feed line [5]. The injector injects the urea or the aqua ammonia in the exhaust gases for NOx removal. In the example of Figure 1, the pump [6] is connected to a first suction point [SP1] located inside the decomposition and storage unit [2] and to a second suction point [SP2] located inside the tank [1]. Advantageously, the pump is connected to the first and second suction points via a 3-way valve [7].

For example, in cold conditions, if at vehicle start-up the urea solution is not available (i.e. not enough urea in liquid state) because it is frozen or if it is desired to meter reducing agent very early while the exhaust pipe is still relatively cold, then the 3-way valve [7] is switched so that the connection between the pump [6] and the first suction point [SP1] is opened and the connection between the pump [6] and the second suction point [SP2] is closed. In this configuration, the pump [6] is used to pump at a required pressure the aqua ammonia stored in the decomposition and storage unit [2]. The aqua ammonia is then injected into the exhaust gases. For example, while metering aqua ammonia into the exhaust gases, a specific heater (not illustrated) located inside the tank [1] can be activated to defreeze the urea solution. When the urea solution becomes available (after thawing), the 3-way valve [7] is switched so that the connection between the pump [6] and the second suction point [SP2] is opened and the connection between the pump [6] and the first suction point [SP1] is closed.

On the other hand, if at vehicle start-up the urea solution is available and if the exhaust temperature is already relatively high, for instance above 180°C, then the 3-way valve [7] is switched so that the connection between the pump [6] and the second suction point [SP2] is opened and the connection between the pump [6] and the first suction point [SP1] is closed. In this configuration, the pump [6] is used to pump at a required pressure the urea solution stored in the tank [1]. The urea solution is then injected into the exhaust gases.

At the end of operation, when the vehicle stops, the 3-way valve [7] is switched back so that the connection between the pump [6] and the first suction point [SP1] is opened and the connection between the pump [6] and the second suction point [SP2] is closed; as a result, aqua ammonia is introduced in the line to the exhaust pipe.

In the particular embodiment illustrated in Figure 1, the decomposition and storage unit [2] comprises an inlet [8] through which the urea solution can enter. In this way, the decomposition and storage unit [2] can be automatically re-filled with urea solution, for aqua ammonia production.

Advantageously, the inlet [8] can comprise a check valve (not illustrated) configured to prevent the produced aqua ammonia to flow back into tank [1].

In a particular embodiment, the system can be equipped with a port (i.e. an access) to allow the bio-agent [3] renewal.

In a particular embodiment, the decomposition and storage unit [2] is a module that is mounted in a sealed manner at the bottom of the tank [1]. Advantageously, this module comprises connection means which allow it to be easily plugged to and unplugged from the tank [1]. For example, a cam lock system or a mason jar system can be used for this purpose.

In another embodiment, the support on which the bio-agent [3] is immobilized can be plugged/unplugged from the tank [1].

Advantageously, the decomposition and storage unit [2] can be surrounded by thermal isolation or by phase change materials (PCM) or can contain PCM material, so that the ammonia precursor solution present in the unit [2] at engine stop continues to be decomposed while the vehicle is at rest, so that aqua ammonia will be available for the next start-up of the engine.

Figure 2 is a schematic view of a SCR system according to a second particular embodiment of the present invention.

The system of Figure 2 comprises the following elements (already described above in relation to Figure 1):
- a container (i.e. tank) [1] ;
- a decomposition and storage unit [2];
- a bio-agent [3] (for example, urease);
- a heater [4]; and
- a pump [6]
- a PCM [11].

In the example of Figure 2, the pump [6] is connected to a first suction point [SP1] located inside the decomposition and storage unit [2].

For example, in cold conditions, if at vehicle start-up the urea solution (stored in the tank [1]) is not available because it is frozen or if the exhaust temperature is in the 120-180°C range, then the aqua ammonia stored in the decomposition and storage unit [2] is sucked by the pump [6] and is injected into the exhaust gases. After elapsing of a period of time related to the thawing of the urea solution in tank [1] and/or whenever the temperature of the exhaust is above a given value, for instance 180°C, the urea solution (in liquid state) that enters (via inlet [8]) and flows through the unit [2] is sucked by the pump [6] and is injected into the exhaust gases. The heater [4] is activated so as to initiate the decomposition of the urea solution into aqua ammonia. At key off (i.e. engine stop), the urea solution inside the unit [2] continues to be decomposed into aqua ammonia. For this aim, the heat stored in the PCM [11] is used to thermally maintain the urease active. Advantageously, vehicle waste heat can be used to thermally activate the urease [3].

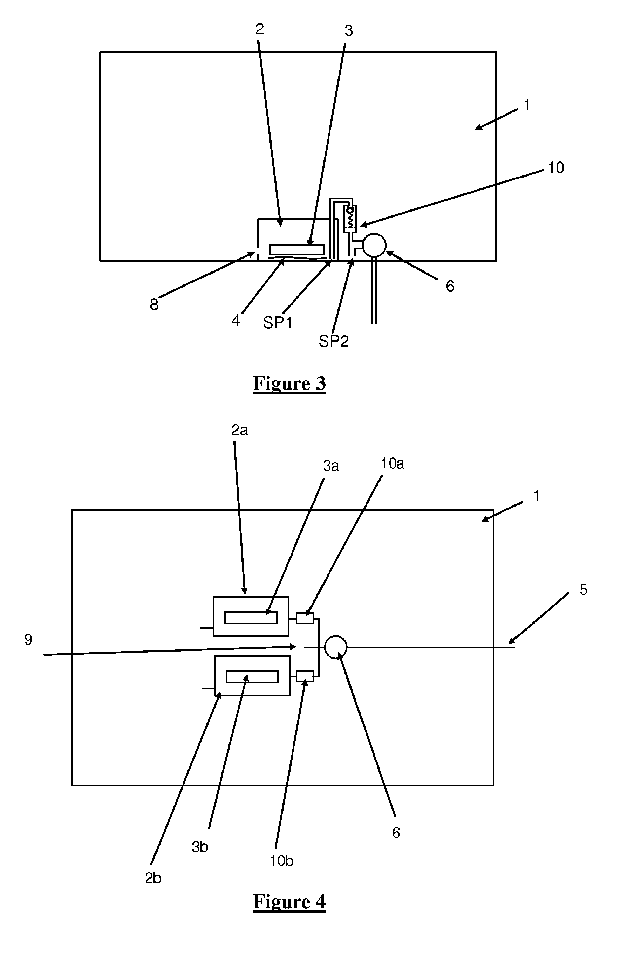

Figure 3 is a schematic view of a SCR system according to a third particular embodiment of the present invention.

The system of Figure 3 comprises the following elements (already described above in relation to Figure 1):
- a container (i.e. tank) [1] ;
- a decomposition and storage unit [2];
- a bio-agent [3] (for example, urease or other enzyme);
- a heater [4]; and
- a pump [6].

In the example of Figure 3, the pump [6] is connected to a first suction point [SP1] located inside the decomposition and storage unit [2] and to a second suction point [SP2] located inside the tank [1]. Advantageously, the pump is connected to the first suction point [SP1] via a non-return valve or a controlled valve [10].

Aqua ammonia is produced inside the unit [2] through the bio-catalyzed decomposition of the urea solution (using the urease [3] with thermal activation provided by heater [4]). When the urea solution is not available for injection (i.e. because it is frozen) or as long as the exhaust temperature is in the 120-180°C range, the aqua ammonia is used as reducing agent for NOx removal in the exhaust gases. After thawing occurred in tank [1] the urea solution (in liquid state) is sucked through the suction point [SP2] using the pump [6], and is injected in the exhaust line. The non-return valve [10] prevents further pumping of liquid from the unit [2]. The unit [2] is re-filled with urea solution through the inlet [8], and ready for the production of aqua ammonia during vehicle driving.

Figure 4 is a schematic view of a SCR system according to a fourth particular embodiment of the present invention.

The system of Figure 4 comprises the following elements (already described above in relation to Figure 1):
- a container (i.e. tank) [1] ;
- a first decomposition and storage unit [2a] comprises a first enzyme [3a] and a first heater (not illustrated) ;
- a first non-return valve or a controlled valve [10a];
- a second decomposition and storage unit [2b] comprises a second enzyme [3b] and a second heater (not illustrated) ;
- a second non-return valve or a controlled valve [10b]; and
- a pump [6].

The functioning (re-filling and decomposition functions) of each of the first and second decomposition and storage units [2a] and [2b] of Figure 4 is identical to the functioning of the decomposition and storage unit [2] of Figure 1.

In a particular embodiment, the first and second enzymes [3a] and [3b] can be different and can have different decomposition properties.

Aqua ammonia is produced inside units [2a] and [2b] by thermal activation of immobilized enzymes (for example, urease) [3a] and [3b]. Both units are connected to pump [6] for further feeding of the exhaust pipe through line [5]. After thawing occurred in tank [1] the urea solution (in liquid state) is sucked through the suction point [9] using the pump [6], and is injected into the exhaust pipe through feed line [5]. The non-return valves [10a] and [10b] prevent further pumping of liquid from the units [2a] and [2b], respectively.

In a particular embodiment, the first unit [2a] can be configured to operate at least intermittently and parallel to the second unit [2b]. In other words, both units can deliver aqua ammonia at the same time and can produce aqua ammonia at the same time.

In another particular embodiment, the first unit [2a] can be configured to operate in alternation with the second unit [2b]. In other words, one unit can be used to deliver aqua ammonia while the other one can be used to produce aqua ammonia for the next vehicle cold start-up, and vice-versa.

In a particular embodiment, the system can comprise more than two decomposition and storage units.

## Claims

1. - SCR or Selective Catalytic Reduction method for purifying the exhaust gases of an internal combustion engine of a vehicle, according to which an ammonia precursor is stored in a container (1) mounted on board the vehicle, wherein the method comprises the steps of:
- decomposing one part of the ammonia precursor into an aqua ammonia;
- storing the aqua ammonia in a unit (2) mounted on board the vehicle;
- metering the stored aqua ammonia into the exhaust gases.

2. - SCR method according to the preceding claim, wherein when the vehicle stops the stored aqua ammonia is introduced in a line connecting the container (1) to an exhaust pipe.

3. - SCR method according to any one of claims 1 and 2, wherein separation of water from aqua ammonia is made using a concentration device, the concentration device preferably comprising at least one membrane.

4. - SCR method according to any one of claims 1 to 3, wherein the ammonia precursor is an ammonia precursor solution, preferably an aqueous urea solution.

5. - SCR method according to the preceding claim, wherein the ammonia precursor solution is metered into the exhaust gases in parallel to or in alternation with the aqua ammonia.

6. - SCR method according to any one of claims 1 to 5, wherein the unit is located at least partially inside the container and/or on a wall of the container.

7. - SCR method according to the preceding claim, wherein the unit is entirely located inside the container.

8. - SCR method according to any one of claims 1 to 7, wherein the unit comprises at least one protein component (3) adapted to decompose the ammonia precursor.

9. - SCR method according to the preceding claim, wherein said protein component comprises at least one enzyme.

10. - SCR method according to any one of claims 8 to 9, wherein the unit comprises a heater (4) adapted to thermally activate said protein component.

11. - SCR method according to any one of claims 1 to 7, wherein the unit comprises at least one heater adapted to thermally decompose the ammonia precursor.

12. - System for applying an SCR method according to any one of the preceding claims, said system comprising:
- a container (1) for the storage of an ammonia precursor;
- means for decomposing one part of the ammonia precursor into an aqua ammonia;
- a unit (2) for the storage of the aqua ammonia;
- means for metering the stored aqua ammonia into the exhaust gases.

13. - System according to the preceding claim, wherein the unit is located at least partially inside the container and/or on a wall of the container.

14. - System according to any of claims 12 to 13, wherein the unit comprises a thermal isolation or at least one phase change material (11).

15. - System according to any of claims 12 to 14, wherein the unit comprises at least one protein component (3) adapted to decompose the ammonia precursor.

16. - System according to any of claims 12 to 14, wherein the unit comprises at least one heater adapted to thermally decompose the ammonia precursor.

17. - System according to the preceding claim, wherein the unit further comprises at least one inorganic-based catalyst.

18. - System according to any of claims 12 to 17, wherein it comprises at least one other decomposition and storage unit (2b).
